# EUROPÄISCHE PATENTSCHRIFT

(11) **EP 0 321 772 B1**
(45) Veröffentlichungstag und Bekanntmachung des Hinweises auf die Patenterteilung: **09.03.1994**
(21) Anmeldenummer: 88120295.6
(22) Anmeldetag: 05.12.1988
(51) Int. Cl.: A63F 3/02, G09B 7/00, G06F 15/44

(54) **Schachlehrcomputer**
Teaching chess computer
Ordinateur d'échecs pour l'enseignement

(30) Priorität: 18.12.1987 DE 8716732 U
(43) Veröffentlichungstag der Anmeldung: 28.06.1989
(73) Patentinhaber: HEGENER + GLASER AG, D-80992 München (DE)
(72) Erfinder: Hegener, Manfred, Dipl.-Wirtschafts-Ing., D-8000 München 2 (DE)
(74) Vertreter: Zeitler, Giselher, Dipl.-Ing.

(56) Entgegenhaltungen:
- AT-B- 150 334
- DE-A- 2 739 019
- US-A- 4 156 976
- US-A- 4 279 421
- RADIO FERNSEHEN ELEKTRONIK. vol. 32, no. 3, März 1983, BERLIN DD Seiten 144 - 147; Dietzsch, U. et al.: "Schachcomputer SC 2"

## Beschreibung

Die Erfindung betrifft ein Spielgerät zum Erlernen des Schachspiels gemäß dem Oberbegriff des Anspruchs 1.

Bei einem bekannten Spielgerät der gattungsgemäßen Art, das in Form eines Schachlehrcomputers ausgestaltet ist, ist es zwar möglich, zusätzlich zum eigentlichen Schachcomputer-Spielbetrieb gesonderte Spielübungsstellungen aufzurufen, mittels denen das Schachspiel erlernt werden kann. Nachteilig ist hierbei jedoch, daß jede einzelne Spielübungsstellung durch eine gesonderte, seitlich an einem Spielbrettrand angeordnete Taste aufgerufen werden muß, was die Tastatur des Spielgerätes in unerwünschter Weise vergrößert bzw. die Verfügbarkeit der in bestimmter Anzahl vorgegebenen Tasten begrenzt. Hinzu kommt außerdem, daß mit dem bekannten Spielgerät lediglich eine geringe Anzahl von Spielübungsstellungen aufrufbar ist, so daß dieses Gerät eine nur begrenzte und wenig wirkungsvolle Funktion als Schachlehrcomputer hat.

Der Erfindung liegt daher die Aufgabe zugrunde, das Spielgerät der gattungsgemäßen Art zur Beseitigung der geschilderten Nachteile derart auszugestalten, daß mit einem nur geringen schaltungstechnischen und konstruktiven Aufwand eine Vielzahl von Spielübungsstellungen zum Erlernen des Schachspiels aufrufbar bzw. elektronisch aktivierbar ist.

Die Merkmale der zur Lösung dieser Aufgabe geschaffenen Erfindung ergeben sich aus Anspruch 1. Vorteilhafte Weiterbildungen hiervon sind in den Unteransprüchen beschrieben.

Dem erfindungsgemäß ausgestalteten Spielgerät liegt der schaltungstechnische Gedanke zugrunde, eine zusätzliche Programmspeichereinrichtung vorzusehen, in der mehrere Spielübungsstellungen gespeichert sind, wobei diese Spielübungsstellungen den einzelnen Spielfeldern des Spielbrettes zugeordnet sind, und zwar derart, daß sie durch Drücken eines bestimmten Spielfeldes bzw. durch Betätigen des betreffenden Betätigungsschalters aufrufbar und somit in den Speicher des Schachcomputers einladbar sind, nachdem zuvor die betreffenden Spielfelder, die ansonsten mittels Betätigungsschalter zur Eingabe der jeweiligen Schachzüge geschaltet sind, zum Auslesen der in der Programmspeichereinrichtung gespeicherten Spielübungsstellungen umgeschaltet wurden.

Zu diesem Zweck ist bei dem Spielgerät gemäß der Erfindung die Ausgestaltung im einzelnen derart getroffen, daß der Schachcomputer mit einer zusätzlichen Programmspeichereinrichtung versehen ist, die ebenfalls im Gehäuseinnern angeordnet ist und mehrere Spielübungsstellungen in eingespeicherter Form enthält. Seitlich neben dem Spielbrett ist ein Schalter zum Umschalten der elektrischen Verbindung zwischen den einzelnen, jeweils einen Betätigungsschalter aufweisenden Spielfeldern und dem Schachcomputer auf die Programmspeichereinrichtung angeordnet. Hierdurch sind die in der Programmspeichereinrichtung enthaltenen einzelnen Spielübungsstellungen bzw. deren Anschlüsse jeweils mit einem Betätigungsschalter der Spielbrettfelder verbunden.

Aufgrund dieser schaltungstechnischen sowie konstruktiven Ausgestaltung ergibt sich der wesentliche Vorteil, daß nicht für jede einzelne, in der Programmspeichereinrichtung gespeicherte Spielübungsstellung eine gesonderte Aufruftaste erforderlich ist, sondern daß es nur eines geringen schaltungstechnischen Aufwandes bedarf, um eine Vielzahl von Spielübungsstellungen zur Verfügung zu haben bzw. elektronisch aktivieren und damit aufrufen zu können.

Eine besonders große Vielfalt von Spielübungsstellungen und damit eine erwünscht große Auswahl ergibt sich dann, wenn gemäß einer vorteilhaften Weiterbildung der Erfindung die Programmspeichereinrichtung vierundsechzig Spielübungsstellungen bzw. entsprechend viele Anschlüsse aufweist und jeder einzelne der vierundsechzig Betätigungsschalter des Schachspielbrettes mit einem der betreffenden Anschlüsse verbindbar ist.

Wenn bei dem erfindungsgemäßen Spielgerät, das ja in üblicher Weise auch als normaler Schachcomputer anwendbar ist, vom normalen Schachcomputer-Spielbetrieb auf den Spielbetrieb als Schachlehrcomputer umgeschaltet werden soll, ist es lediglich erforderlich, den seitlich neben dem Spielbrett oder an einer sonstigen geeigneten Stelle vorgesehenen Umschalter zu betätigen. Hierdurch werden die einzelnen Betätigungsschalter der vierundsechzig Spielbrettfelder, die beim normalen Schachcomputer-Spielbetrieb zur Eingabe des jeweils durchgeführten Schachzuges verwendet werden, umgeschaltet, und zwar zum Auslesen der in der Programmspeichereinrichtung gespeicherten Spielübungsstellungen. Danach wird dann ein beliebiges der vierundsechzig Spielfelder des Schachspielbrettes gedrückt, so daß aufgrund des hierdurch aktivierten Betätigungsschalters die Verbindung mit der betreffenden Spielübungsstellung in der Programmspeichereinrichtung hergestellt und diese aus dem Programmspeicher in den Schachcomputer geladen wird.

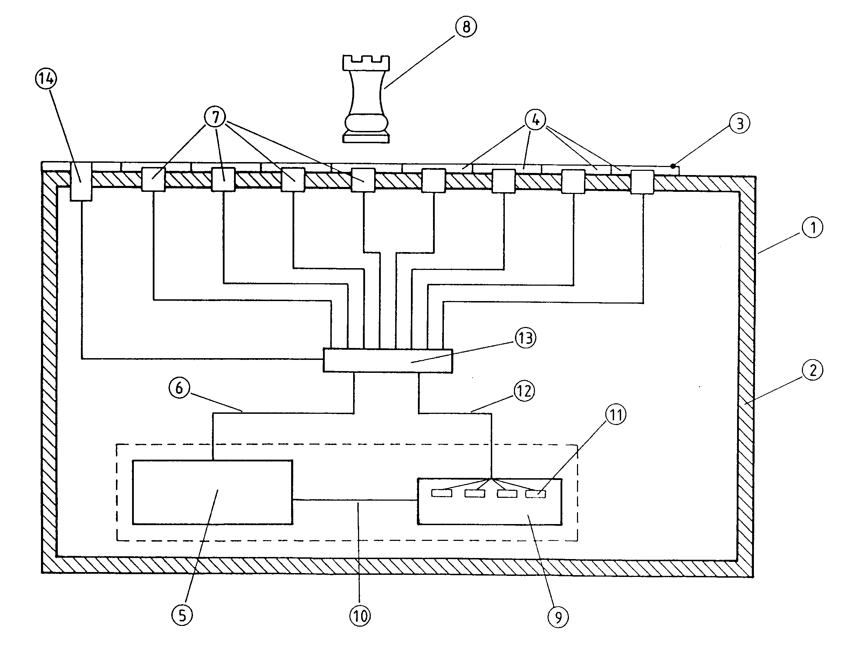

Die Erfindung wird im folgenden anhand der einzigen Zeichnung näher erläutert. Diese zeigt schematisch das Spielgerät gemäß der Erfindung mit einem entsprechenden Blockschaltbild.

Wie aus der Zeichnung ersichtlich, ist ein Spielgerät 1 vorgesehen, das als Schachlehrcomputer ausgestaltet ist und ein Gehäuse 2 aufweist. Dieses ist an seiner Oberseite mit einem hieran befestigten oder anderweitig angebrachten Spielbrett 3 versehen, das in üblicher Weise in 64 gleichgroße Schachspielfelder 4 unterteilt ist.

Im Innern des Gehäuses 2 ist ein Schachcomputer 5 angeordnet, der in bekannter Weise als Datenverarbeitungsschaltung ausgestaltet ist und über entsprechend viele Leitungen 6 mit jedem einzelnen Spielfeld 4 des Schachspielbrettes 3 verbunden ist.

Wie in der Zeichnung schematisch angedeutet, ist zwischen jedem Spielfeld 4 des Schachspielbrettes 1 und der zugeordneten Verbindungsleitung 6 ein Betätigungsschalter 7 vorgesehen, der als Druck- bzw. Sensorschalter ausgebildet ist und bei entsprechender Betätigung durch eine unter bestimmtem Druck auf das Spielfeld 4 aufgesetzte Schachfigur 8 die elektrische Verbindung zwischen diesem speziellen Spielfeld 4 und dem Schachcomputer 5 herstellt bzw. diesem ein entsprechendes Signal zuleitet.

Wie weiterhin ersichtlich, ist innerhalb des Gehäuses 2 eine zusätzliche Programmspeichereinrichtung 9 vorgesehen, die über eine Leitung 10 mit dem Schachcomputer 5 verbunden ist und beim dargestellten Ausführungsbeispiel 64 eingespeicherte Spielschaltungseinheiten 11, die jeweils einer Spielübungsstellung bzw. Übungsaufgabe entsprechen, enthält.

Die einzelnen Spielschaltungseinheiten 11 bzw. deren Anschlüsse 12 sind jeweils mit einem Betätigungsschalter 7 der Schachspielfelder 4 verbunden. Hierbei ist die Anordnung bzw. Schaltung derart getroffen, daß zwischen den Anschlüssen 12 und den Verbindungsleitungen 6 eine Schalteinrichtung 13 vorgesehen ist, die mittels eines Umschalters 14 wahlweise derart betätigbar ist, daß entweder die Spielschaltungseinheiten 11 der Programmspeichereinrichtung 9 bzw. deren Anschlüsse 12 oder der Schachcomputer 5 bzw. dessen Leitungen 6 mit den Betätigungsschaltern 7 der Spielfelder 4 verbunden ist. Der Umschalter 14 ist seitlich an einem Rand des Spielbrettes 3 angeordnet und in der Oberseite des Gehäuses 1 befestigt.

Wie durch die gestrichelte Linie in der Zeichnung angedeutet, sind der Schachcomputer 5 und der die Spielschaltungseinheiten 11 bzw. Übungsaufgaben beinhaltete Programmspeicher 9 bei einer praktischen Verwirklichung des beschriebenen Spielgerätes 1 als Einheit (EPROM) ausgebildet.

Es ist selbstverständlich möglich, das beschriebene Spielgerät 1 derart abzuwandeln, daß der Übungsaufgaben-Programmspeicher 9 auch mehr als vierundsechzig Spielübungsstellungen 11 enthält, beispielsweise einhundertachtundzwanzig oder ein sonstiges Vielfaches der ursprünglich eingespeicherten Anzahl. In diesem Fall können die Spielfelder 4 bzw. deren Betätigungsschalter 7 doppelt oder entsprechend mehrfach (funktions)belegt sein, wobei dann ein spezieller beliebiger Spielfeld-Betätigungsschalter 7 zum Umschalten auf die jeweiligen Aufgaben- bzw. Speicherbereiche 1 - 64, 65 - 128 usw. dienen kann.

## Patentansprüche

1. Spielgerät (1) zum Erlernen des Schachspiels, das in Form eines Schachlehrcomputers ausgestaltet ist, mit einem Gehäuse (2), das an seiner Oberseite ein in vierundsechzig gleichgroße Spielfelder (4) unterteiltes Spielbrett (3) aufweist und in seinem Innern einen Schachcomputer (5) aufnimmt, dessen Signaleingänge bzw. -ausgänge (6) mit den einzelnen Spielfeldern (4) verbunden sind und bei dem Spielübungsstellungen (11) aufrufbar sind,
**dadurch gekennzeichnet,**
- daß der Schachcomputer (5) mit einer zusätzlichen Programmspeichereinrichtung (9) verbunden ist, die ebenfalls im Innern des Gehäuses (2) angeordnet ist und mehrere Spielübungsstellungen (11) in eingespeicherter Form enthält,
- daß seitlich neben dem Spielbrett (3) ein Schalter (14) vorgesehen ist, der eine Schalteinrichtung (13) betätigt, durch die eine elektrische Verbindung von den jeweils einen Betätigungsschalter (7) aufweisenden Spielfeldern (4) entweder zu dem Schachcomputer (5) oder zu der Programmspeichereinrichtung (9) hergestellt wird,
- wodurch die in der Programmspeichereinrichtung (9) enthaltenen Spielübungsstellungen (11) bzw. deren Anschlüsse jeweils mit einem Betätigungsschalter (7) der Spielbrettfelder (4) verbunden sind,
- und daß jedem Betätigungsschalter (7) eine Spielübungsstellung (11) entspricht, die bei dessen Betätigung im Schachcomputer geladen wird.

2. Spielgerät nach Anspruch 1,
**dadurch gekennzeichnet,**
daß die Programmspeichereinrichtung (9) vierundsechzig Spielübungsstellungen (11) bzw. entsprechend viele Anschlüsse aufweist und daS jeder einzelne der vierundsechzig Betätigungsschalter (7) des Schachspielbrettes (3) mit einem der betreffenden Anschlüsse unter Betätigung des Schalters (14) verbindbar ist.

3. Spielgerät nach Anspruch 1 oder 2,
**dadurch gekennzeichnet,**
daß der Schachcomputer (5) und die Programmspeichereinrichtung (9) als Einheit ausgebildet sind.

4. Spielgerät nach einem der Ansprüche 1 bis 3,
**dadurch gekennzeichnet,**
daß die Programmspeichereinrichtung (9) ein ganzzahliges Mehrfaches der ursprünglich eingespeicherten vierundsechzig Spielübungsstellungen (11) aufweist.

## Claims

1. Playing device (1) for learning how to play chess, designed as a chess tuition computer, with a casing (2) provided on its upper side with a playing board (3) subdivided into sixty-four squares (4) of identical size, whereby said playing device accommodates within itself a chess computer (5), the signal inputs and outputs (6) of which are connected with the individual squares (4) and using which training positions (11) are addressable,
**characterised in that**
- chess computer (5) is connected with an additional program memory device (9) which is likewise arranged within casing (2) and contains several training positions (11) in stored form,
- at the side next to playing board (3) a switch (14) is provided for actuating a switching device (13) by means of which an electrical connection is established between squares (4), each of which is provided with an actuating switch (7), and chess computer (5) or program memory device (9),
- as a result of which the training positions (11) stored in program memory device (9) or the respective connections of said training positions are each connected with an actuating switch (7) of playing-board squares (4),
- and that to each actuating switch (7) there corresponds a training position (11) which is loaded into the chess computer when said switch is actuated.

2. Playing device according to Claim 1,
**characterised in that**
program memory device (9) comprises sixty-four training positions (11) or a corresponding number of connections, and that each of the sixty-four actuating switches (7) of playing board (3) can be connected with one of the corresponding connections by actuating the switch (14).

3. Playing device according to Claim 1 or 2,
**characterised in that**
chess computer (5) and program memory device (9) are designed as a unit.

4. Playing device according to one of Claims 1 to 3,
**characterised in that**
program memory device (9) comprises an integral multiple of the sixty-four training positions (11) stored originally.

## Revendications

1. Dispositif de jeu (1) pour l'enseignement du jeu d'échecs réalisé sous forme d'un ordinateur d'enseignement des échecs comportant un boîtier (2) qui, sur sa face supérieure, présente un échiquier (3) divisé en soixante-quatre cases de jeu (4) d'égales dimensions et, à l'intérieur, loge un ordinateur d'échecs (5) dont les entrées ou les sorties (6) de signaux sont reliées aux différentes cases du jeu (4) et chez lequel peuvent être appelées des positions d'entrainement au jeu (11),
dispositif caractérisé
- par le fait que l'ordinateur d'échecs (5) est relié à un dispositif complémentaire de mémorisation de programmes (9) qui est également disposé à l'intérieur du boîtier (2) et contient, sous forme mémorisée, plusieurs positions d'entrainement au jeu (11),
- par le fait que sur le côté, à côté de l'échiquier (3), est prévu un commutateur (14) qui manoeuvre un dispositif de commutation (13) au moyen duquel est réalisée une liaison électrique entre les cases de jeu (4), présentant chacune un commutateur de manoeuvre (7), et soit l'ordinateur d'échecs (5), soit le dispositif de mémorisation des programmes (9),
- de sorte que les positions d'entrainement au jeu (11), contenues dans le dispositif de mémorisation des programmes (9), ou ses bornes sont reliées, chacune, à un commutateur de manoeuvre (7) des cases (4) de l'échiquier,
- et par le fait qu'à chaque commutateur de manoeuvre (7) correspond une position d'entrainement au jeu (11) qui lors de la manoeuvre de ce commutateur, est chargée dans l'ordinateur d'échecs.

2. Dispositif de jeu selon la revendication 1,
caractérisé
par le fait que le dispositif de mémorisation des programmes (9) présente soixante-quatre positions d'entrainement au jeu (11) ou le nombre correspondant de bornes et par le fait que l'on peut relier chacun des soixante-quatre commutateurs de manoeuvre (7) de l'échiquier (3) à l'une des bornes en question en manoeuvrant le commutateur (14).

3. Dispositif de jeu selon la revendication 1 ou 2,
caractérisé par le fait que l'ordinateur d'échecs (5) et le dispositif de mémorisation de programmes (9) sont conçus sous forme d'un ensemble.

4. Dispositif de jeu selon l'une des revendications 1 à 3,
caractérisé
par le fait que le dispositif de mémorisation des programmes (9) présente un multiple entier des soixante-quatre positions d'entrainement au jeu (11) mémorisées à l'origine.
